# EUROPEAN PATENT APPLICATION

(11) **EP 4 485 913 A1**
(43) Date of publication of application: **01.01.2025**
(21) Application number: 24181351.8
(22) Date of filing: 11.06.2024
(51) Int. Cl.: H04M 9/08

(54) **AN APPARATUS AND METHOD FOR CONTROLLABLE ACOUSTIC ECHO CANCELLATION**

(30) Priority: 30.06.2023 GB 202310053
(71) Applicant: Nokia Technologies Oy, 02610 Espoo (FI)
(72) Inventor: MÄKINEN, Jorma Juhani, Tampere (FI); VILERMO, Miikka Tapani, Siuro (FI)
(74) Representative: Nokia EPO representatives

(57) **Abstract**

A method for a communications system between at least three devices, the method comprising: determining at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; controlling the at least one ambient transmitting device to reduce the effect of the controllable acoustic echo canceller; and applying at least one delay difference to at least one communications path between non-ambient devices.

## Description

### Field

The present application relates to apparatus and methods for acoustic echo cancelation, but not exclusively for acoustic echo cancelation artefact masking and reduction for ambient audio sharing using a delay.

### Background

There has been designed and demonstrated live immersive audio telecommunications where telecommunication participants can enjoy spatial audio. Typical immersive audio content has an ambient signal component. Listening to mixed ambient content from different locations can be tiresome and confusing, therefore the live immersive audio telecommunications application typically would use immersive audio from one participant and a dry mono speech audio from other participants. The mono speech audio signals are typically rendered to user desired directions.

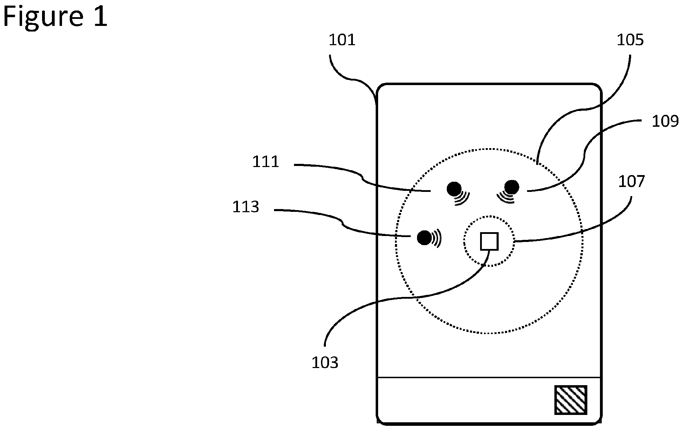

In the example live immersive audio telecommunications representation shown in Figure 1 the user interface 101 shows a listener 'Sami' 103 at a `central' position or location 107 and surrounding participants (audio sources) 109 'Mikko', 111 'Jyri', and 113 `Katja' located around 'Sami' 103 within a periphery range 105. From 'Sami' both their voice and ambience is heard. Ambience is typically spatial and voice can be in a spatial or mono format. From other participants 109 'Mikko', 111 'Jyri', and 113 `Katja' a mono voice audio signal is panned to directions and distance where their icons are. A user can move the icons freely of all other users than 'Sami'. Moving the icon affects the direction and perceived distance of the participants.

Telecommunications applications require accurate AEC (Acoustic Echo Cancellation) otherwise participants can hear their own voice with a delay, which makes talking difficult or worse, can create a loud feedback loop making communication impossible.

As such there is a requirement for implementing AEC within immersive audio telecommunications applications.

### Summary

There is provided according to a first aspect a method for a communications system between at least three devices, the method comprising: determining at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; controlling the at least one ambient transmitting device to reduce the effect of the controllable acoustic echo canceller; and applying at least one delay difference to at least one communications path between non-ambient devices.

Applying the at least one delay difference to the at least one communications path between non-ambient devices may be such that the at least one delay difference applied to the at least one communications path between non-ambient devices aims to reduce the effect of artifacts produced by the controllable acoustic echo canceller.

Determining at least one device of the at least three devices is the ambient transmitting device may comprise determining one device whose audio is transmitted spatially.

Determining at least one device of the at least three devices is the ambient transmitting device may comprise determining at least one further ambient transmitting device whose audio signals are at least one of: a non-spatial audio signal; and a mono channel audio signal.

Determining at least one device of the at least three devices is the ambient transmitting device may comprise at least one of: selecting the at least one ambient transmitting device based on a user input; selecting the at least one ambient transmitting device based on an analysis of audio signals from the at least three devices.

Selecting the at least one ambient transmitting device based on an analysis of audio signals from the at least three devices may comprise identifying at least one of: a most music like audio signal; and a least noise-like audio signal.

Applying the at least one delay difference to communications paths between non-ambient devices may comprise applying a same delay difference to more than two communications paths between non-ambient devices.

Applying the at least one delay difference to communications paths between non-ambient devices may comprise applying a smallest of the at least one delay difference.

Applying the at least one delay difference to communications paths between non-ambient devices may comprise applying an average of the at least one delay difference.

Applying the at least one delay difference to communications paths between non-ambient devices may comprise applying a separate one of the at least one delay difference to communications paths for each pair of non-ambient devices.

The at least one delay difference to communications paths for each pair of non-ambient devices may further based on at least one of: network conditions between non-ambient devices; device hardware capability for the non-ambient devices; and codec delays for the non-ambient devices.

Controlling the at least one ambient transmitting device to reduce the effect of the acoustic echo canceller may comprise controlling ratio inputs for a mixing of an acoustic echo canceller audio signal with a microphone audio signal to control a component of the acoustic echo canceller audio signal in an output from the acoustic echo canceller.

The at least one ambient audio signal may be at least one audio signal captured with respect to an audio scene surrounding the at least one ambient device.

The method may further comprise: determining at least one delay between a pair of non-ambient devices; determining at least one further delay between the at least one ambient transmitting device and at least one non-ambient device; and determining the at least one at least one delay difference based on the at least one delay and at least one further delay.

The at least one delay between a pair of non-ambient devices may be at least one non-ambient communication delay between the pair of non-ambient devices, and the at least one further delay between the at least one ambient transmitting device and at least one non-ambient device is at least one ambient communication delay.

According to a second aspect there is provided an apparatus for a communications system between at least three devices, the apparatus comprising at least one processor and at least one memory storing instructions that, when executed by the at least one processor, cause the apparatus at least to perform: determining at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; controlling the at least one ambient transmitting device to reduce the effect of the controllable acoustic echo canceller; and applying at least one delay difference to at least one communications path between non-ambient devices.

The apparatus caused to perform applying the at least one delay difference to the at least one communications path between non-ambient devices may be such that the at least one delay difference applied to the at least one communications path between non-ambient devices aims to reduce the effect of artifacts produced by the controllable acoustic echo canceller.

The apparatus caused to perform determining at least one device of the at least three devices is the ambient transmitting device may be further caused to perform determining one device whose audio is transmitted spatially.

The apparatus caused to perform determining at least one device of the at least three devices is the ambient transmitting device may be further caused to perform determining at least one further ambient transmitting device whose audio signals are at least one of: a non-spatial audio signal; and a mono channel audio signal.

The apparatus caused to perform determining at least one device of the at least three devices is the ambient transmitting device may be caused to perform at least one of: selecting the at least one ambient transmitting device based on a user input; selecting the at least one ambient transmitting device based on an analysis of audio signals from the at least three devices.

The apparatus caused to perform selecting the at least one ambient transmitting device based on an analysis of audio signals from the at least three devices may be caused to perform identifying at least one of: a most music like audio signal; and a least noise-like audio signal.

The apparatus caused to perform applying the at least one delay difference to communications paths between non-ambient devices may be caused to perform applying a same delay difference to more than two communications paths between non-ambient devices.

The apparatus caused to perform applying the at least one delay difference to communications paths between non-ambient devices may be caused to perform applying a smallest of the at least one delay difference.

The apparatus caused to perform applying the at least one delay difference to communications paths between non-ambient devices may be caused to perform applying an average of the at least one delay difference.

The apparatus caused to perform applying the at least one delay difference to communications paths between non-ambient devices may be caused to perform applying a separate one of the at least one delay difference to communications paths for each pair of non-ambient devices.

The at least one delay difference to communications paths for each pair of non-ambient devices may be further based on at least one of: network conditions between non-ambient devices; device hardware capability for the non-ambient devices; and codec delays for the non-ambient devices.

The apparatus caused to perform controlling the at least one ambient transmitting device to reduce the effect of the acoustic echo canceller may be caused to perform controlling ratio inputs for a mixing of an acoustic echo canceller audio signal with a microphone audio signal to control a component of the acoustic echo canceller audio signal in an output from the acoustic echo canceller.

The at least one ambient audio signal may be at least one audio signal captured with respect to an audio scene surrounding the at least one ambient device.

The apparatus may be further caused to perform: determining at least one delay between a pair of non-ambient devices; determining at least one further delay between the at least one ambient transmitting device and at least one non-ambient device; and determining the at least one at least one delay difference based on the at least one delay and at least one further delay.

The at least one delay between a pair of non-ambient devices may be at least one non-ambient communication delay between the pair of non-ambient devices, and the at least one further delay between the at least one ambient transmitting device and at least one non-ambient device is at least one ambient communication delay.

According to a third aspect there is provided an apparatus for a communications system between at least three devices, the apparatus comprising means configured to: determine at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; control the at least one ambient transmitting device to reduce the effect of the controllable acoustic echo canceller; and apply at least one delay difference to at least one communications path between non-ambient devices.

The means configured to apply the at least one delay difference to the at least one communications path between non-ambient devices may be such that the at least one delay difference applied to the at least one communications path between non-ambient devices aims to reduce the effect of artifacts produced by the controllable acoustic echo canceller.

The means configured to determine at least one device of the at least three devices is the ambient transmitting device may be configured to determine one device whose audio is transmitted spatially.

The means configured to determine at least one device of the at least three devices is the ambient transmitting device may be configured to determine at least one further ambient transmitting device whose audio signals are at least one of: a non-spatial audio signal; and a mono channel audio signal.

The means configured to determine at least one device of the at least three devices is the ambient transmitting device may be configured to at least one of: select the at least one ambient transmitting device based on a user input; select the at least one ambient transmitting device based on an analysis of audio signals from the at least three devices.

The means configured to select the at least one ambient transmitting device based on an analysis of audio signals from the at least three devices may be configured to identify at least one of: a most music like audio signal; and a least noise-like audio signal.

The means configured to apply the at least one delay difference to communications paths between non-ambient devices may be configured to apply a same delay difference to more than two communications paths between non-ambient devices.

The means configured to apply the at least one delay difference to communications paths between non-ambient devices may be configured to apply a smallest of the at least one delay difference.

The means configured to apply the at least one delay difference to communications paths between non-ambient devices may be configured to apply an average of the at least one delay difference.

The means configured to apply the at least one delay difference to communications paths between non-ambient devices may be configured to apply a separate one of the at least one delay difference to communications paths for each pair of non-ambient devices.

The at least one delay difference to communications paths for each pair of non-ambient devices may further based on at least one of: network conditions between non-ambient devices; device hardware capability for the non-ambient devices; and codec delays for the non-ambient devices.

The means configured to control the at least one ambient transmitting device to reduce the effect of the acoustic echo canceller may be configured to control ratio inputs for a mixing of an acoustic echo canceller audio signal with a microphone audio signal to control a component of the acoustic echo canceller audio signal in an output from the acoustic echo canceller.

The at least one ambient audio signal may be at least one audio signal captured with respect to an audio scene surrounding the at least one ambient device.

The means may further be configured to: determine at least one delay between a pair of non-ambient devices; determine at least one further delay between the at least one ambient transmitting device and at least one non-ambient device; and determine the at least one at least one delay difference based on the at least one delay and at least one further delay.

The at least one delay between a pair of non-ambient devices may be at least one non-ambient communication delay between the pair of non-ambient devices, and the at least one further delay between the at least one ambient transmitting device and at least one non-ambient device is at least one ambient communication delay.

According to a fourth aspect there is provided an apparatus for a communications system between at least three devices, the apparatus comprising: determining circuitry configured to determine at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; controlling circuitry configured to control the at least one ambient transmitting device to reduce the effect of the controllable acoustic echo canceller; and applying circuitry configured to apply at least one delay difference to at least one communications path between non-ambient devices.

According to a fifth aspect there is provided a computer program comprising instructions [or a computer readable medium comprising instructions] for causing an apparatus, for a communications system between at least three devices, the apparatus caused to perform at least the following: determining at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; controlling the at least one ambient transmitting device to reduce the effect of the controllable acoustic echo canceller; and applying at least one delay difference to at least one communications path between non-ambient devices.

According to a sixth aspect there is provided a non-transitory computer readable medium comprising program instructions for causing an apparatus, for a communications system between at least three devices, to perform at least the following: determining at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; controlling the at least one ambient transmitting device to reduce the effect of the controllable acoustic echo canceller; and applying at least one delay difference to at least one communications path between non-ambient devices.

According to a seventh aspect there is provided an apparatus, for a communications system between at least three devices, comprising: means for determining at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; means for controlling the at least one ambient transmitting device to reduce the effect of the controllable acoustic echo canceller; and means for applying at least one delay difference to at least one communications path between non-ambient devices..

According to an eighth aspect there is provided a computer readable medium comprising instructions for causing an apparatus, for a communications system between at least three devices, to perform at least the following: determining at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices; controlling the at least one ambient transmitting device to reduce the effect of the controllable acoustic echo canceller; and applying at least one delay difference to at least one communications path between non-ambient devices.

An apparatus comprising means for performing the actions of the method as described above.

An apparatus configured to perform the actions of the method as described above.

A computer program comprising instructions for causing a computer to perform the method as described above.

A computer program product stored on a medium may cause an apparatus to perform the method as described herein.

An electronic device may comprise apparatus as described herein.

A chipset may comprise apparatus as described herein.

Embodiments of the present application aim to address problems associated with the state of the art.

### Summary of the Figures

For a better understanding of the present application, reference will now be made by way of example to the accompanying drawings in which:
Figure 1 shows an example immersive audio communications application user interface;
Figure 2 shows an example environment comprising multiple devices in a communications environment;
Figure 3 shows an example time line showing differences between various communication pathways;
Figure 4 shows a further example environment comprising multiple devices in a communications environment within which some embodiments may be implemented;
Figure 5 shows schematically an example device as shown in Figure 4;
Figure 6 shows schematically an echo cancellation arrangement within the example device as shown in Figures 4 and 5 according to some embodiments;
Figure 7 shows schematically a further echo cancellation arrangement within the example device as shown in Figures 4 and 5 according to some embodiments;
Figure 8 shows an example environment comprising multiple devices in a communications environment according to some embodiments; and
Figure 9 shows a flow diagram of the operation of the example echo cancellation arrangement shown in Figures 6 and 7 to some embodiments.

### Embodiments of the Application

The following describes in further detail suitable apparatus and possible mechanisms for implementing AEC (Acoustic Echo Cancellation) in immersive communication applications.

As discussed above AEC in immersive communication applications prevents the situation wherein participants can possibly hear their own voice with a delay, which makes talking difficult or worse cause unbearably loud feedback.

AEC can generate artefacts in the output audio signal when not perfectly implemented although the AEC is used to stop sound feedback in two-way audio communications.

Furthermore, spatial audio communications applications can require multiple microphones and speakers and the ambient audio can be typically transmitted spatially. When multiple microphones and/or speakers are used, optimizing AEC performance is harder than with a single microphone and/or single speaker and the generated artefacts can be more severe.

Background sounds, in other words ambient audio signals, are typically continuous and a known common solution of muting microphones on an occasional basis cannot be used the way it can be used in voice or speech only channels to reduce or suppress the acoustic echoes (as the speech only signals are typically not continuous and can be muted or suppressed based on VAD - voice activity detection).

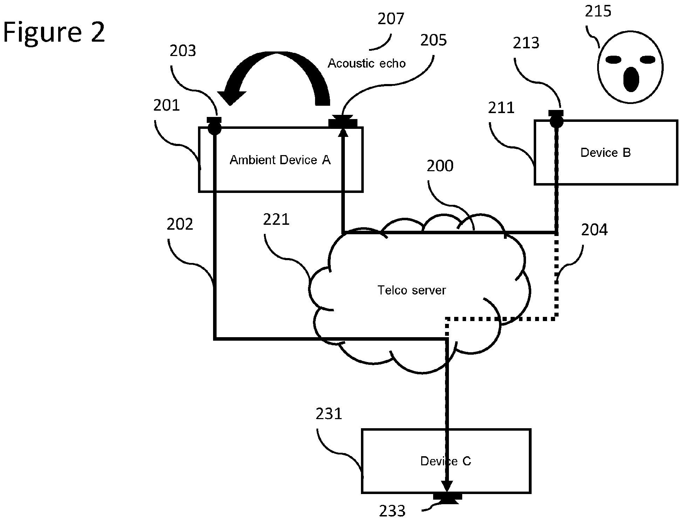

As shown in the example presented in Figure 2, Device A 201 comprises a microphone 203, loudspeaker 205 and an acoustic echo path 207 between the two. The device A 201 is configured to transmit ambience audio (whereas the other devices do not capture or transmit ambience audio).

Device B 211 within the communications system, can comprise a microphone 213 configured to capture the talker 215.

Furthermore device C 231 comprises a loudspeaker 233.

All three devices are connected by the telecommunications server 221.

The device C 231 is configured to receive from Device B the talker audio signals directly via path 204 (which is shown in Figure 2 by the dotted line).

In this example when the AEC within device A 201 is not performing well (and generating substantial artifacts), it is switched off or the effect of the AEC is decreased. This would reduce the effect of the generated artifacts but the Device C 231 would be configured to receive an echo of the talker 215 via the Device A 201. In other words the talker audio signals are obtained via the path 200, the loudspeaker 205, the acoustic echo path 207, the microphone 203 and the path 202 These are represented by the solid line paths.

In this way device A 201 AEC performance could be improved as the artefacts caused to the ambient content would be less annoying. However, unsurprisingly, this causes problems with echo where people can hear themselves talking with a delay.

As device C hears the talker voice from two different routes where one (route via device A 201) is longer, it has bigger latency and thus a user of device C 231 hears the talker 215 of device B 221 talk twice, which is annoying and distracting.

Therefore, any participants or devices, configured to capture and communicate ambient sounds is going to create AEC based problems whether AEC performance is normal or reduced.

In other words, in communications systems where ambient audio is communicated from at least one device and when AEC is used, there can be artefacts caused by AEC suboptimal performance and echoes causes by AEC being applied partially or not at all.

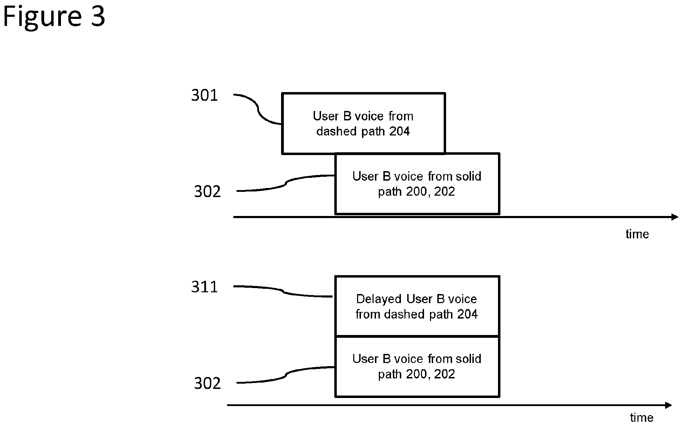

The problem of two non-simultaneously heard versions of the same sound source is illustrated in Figure 3.

For example, the audio signals 301 of the user B voice via direct or dashed path 204 is received before the audio signals 302 of the user B voice via the indirect or solid path 200, 202. Furthermore, to reduce the effect of the two versions of the voice or talker audio signals there can be a delay added to the faster path.

The effect of the addition of the delay can produce the effect where a delayed audio signals 311 of the user B voice via direct or dashed path 204 is received at the same time as the audio signals 302 of the user B voice via the indirect or solid path 200, 202.

When the two signals overlap, the original sound and the duplicate occur at the same time and mask the problem.

The concept as discussed in the embodiments in further detail hereafter is a method and suitable apparatus for reducing AEC artefacts in a telecommunications system (these typically can be implemented within a spatial audio telecommunications system but can in some embodiments be implemented within a mono audio telecommunications system).

The method and apparatus can be configured to add a delay between non-ambient transmitting device audio signal paths where the added delay attempts to mask AEC artefacts or echoes when AEC does not manage to fully suppress generated echoes or when AEC is only partially applied.

The method may also control AEC operation based on whether the device transmits ambience audio to the telecommunications system or not. The ambience transmitting device can thus in some embodiments be configured to reduce its AEC operation in comparison to non-ambience transmitting devices to reduce artefacts caused by AEC.

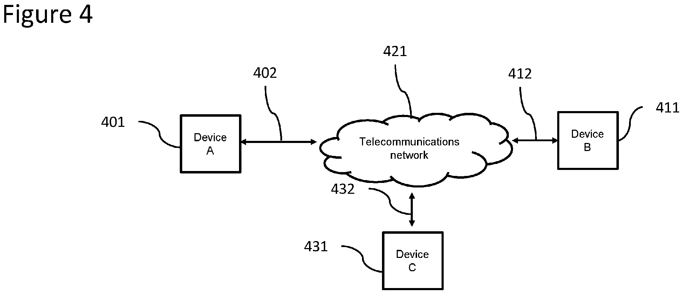

With respect to Figure 4 is shown an example telecommunications system within which embodiments can be employed. In the following examples the telecommunications system comprises devices, for example device A 401 which is used by user A, device B 411 which is used by user B, and device C 431 which is used by user C. These devices are connected to each other via a telecommunications network 421. For example as shown in Figure 4 is a first path 402 between device A 401 and the telecommunications network 421, a second path 412 between device B 411 and the telecommunications network 421, and a third path 432 between device C 431 and the telecommunications network 421.

Although in the following examples there is shown an example telecommunications call between device A 401, device B 411, and device C 431 respectively it is understood that the following can be applied to networks and telecommunications calls involving more than three devices.

The devices (or apparatus) can be mobile phones, laptops, tablets, HMDs, wearable devices, or any suitable apparatus comprising at least one microphone, at least one loudspeaker (and/or headphones) and network connectivity (or telecommunications transceiver means).

Furthermore in some embodiments the telecommunications server functionality may be implemented in one of the devices or in a separate device or in a server connected to network or in a distributed or cloud network.

In the following examples at least one of the users is in a location from which they want to share ambient audio to the other users. In the following examples and shown in the following figures this is user A operating device A 401. Thus, in the following examples device A 401 is also called the ambient device. The location of device A can be any suitable location, such as a concert, party, forest, zoo, car race etc. Other participants are non-ambient users with non-ambient devices.

In some embodiments there can be several participants or users operating more than one device with the capability to transmit ambient audio. In such examples the telecommunications server can be configured to choose one device whose audio is transmitted spatially and other device audio signals are not (for example these non-spatial audio signals can be converted to a mono channel audio signal).

In some embodiments the selection may be implemented based on user input or automatically by analysing which participant audio is generating the 'most interesting' audio signals. In some embodiments the 'most interesting' audio signals can be those which are most music like, least noise-like but still with significant audible energy. This analysis can be implemented using any known audio context recognition algorithm and can use machine learning or traditional methods.

In some embodiments there can be several participants transmitting ambient audio simultaneously. In these embodiments the following methods for a single ambient audio signal can be extended but only connections where both ends are non-ambient users are configured to apply the extra delay. The delay used could be, for example, the smallest of the delays caused by the ambient participants or an average of the delays. In some embodiments each ambient participant may have their own delay caused by network conditions, device hardware, codec delays, acoustic echo induced delay etc.

In some embodiments the ambient audio signals can be mono audio signals, but typically can be spatial audio signals. Spatial audio signals can comprise any of: stereo audio signal format, binaural audio signal format, or different loudspeaker channel formats 5.1, 7.1, 22.2, parametric spatial audio formats such as DirAC (Directional Audio Coding), Nokia OZO etc.

Audio from non-ambient participants can be mono audio signal formats or spatial audio signal formats but typically is transmitted as mono audio signals and rendered at the end device spatially from a determined direction.

The telecommunications system is configured in the following example to transmit at least one non-ambient audio signal and at least one ambient audio signal.

The ambient device, for example device A 401, may or may not use AEC. The ambient device in some embodiments is configured to control the use of AEC such that the device uses AEC less or not at all to preserve the audio quality in the ambient signal. As discussed above the application of AEC can cause artefacts to the ambient signal while not using AEC can cause echoes to be transmitted. Ambient signals are challenging for AEC because: ambient signals can be continuous unlike speech making microphone muting not an option. The non-ambient device use AEC fully.

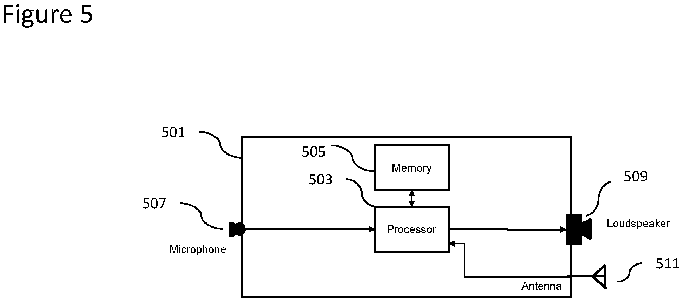

With respect to Figure 5 is shown a schematic view of an example device or apparatus. As discussed above the device may be any suitable electronics device or apparatus. The device 501 may for example be configured to implement any functional block as described herein.

In some embodiments the device 501 comprises at least one processor or central processing unit 503. The processor 503 can be configured to execute various program codes such as the methods such as described herein.

In some embodiments the device 501 comprises a memory 505. In some embodiments the at least one processor 503 is coupled to the memory 505. The memory 505 can be any suitable storage means. In some embodiments the memory 505 comprises a program code section for storing program codes implementable upon the processor 503. Furthermore, in some embodiments the memory 505 can further comprise a stored data section for storing data, for example data that has been processed or to be processed in accordance with the embodiments as described herein. The implemented program code stored within the program code section and the data stored within the stored data section can be retrieved by the processor 503 whenever needed via the memory-processor coupling.

In some embodiments the device 501 comprises a user interface (not shown). The user interface can be coupled in some embodiments to the processor 503. In some embodiments the processor 503 can control the operation of the user interface and receive inputs from the user interface. In some embodiments the user interface can enable a user to input commands to the device 501, for example via a keypad. In some embodiments the user interface can enable the user to obtain information from the device 501. For example, the user interface may comprise a display configured to display information from the device 501 to the user. The user interface can in some embodiments comprise a touch screen or touch interface capable of both enabling information to be entered to the device 501 and further displaying information to the user of the device 501. In some embodiments the user interface may be the user interface for communicating.

In some embodiments the device 501 comprises an input/output port. The input/output port in some embodiments comprises a transceiver. The transceiver in such embodiments can be coupled to the processor 501 and configured to enable a communication with other apparatus or electronic devices, for example via a wireless communications network. The transceiver or any suitable transceiver or transmitter and/or receiver means can in some embodiments be configured to communicate with other electronic devices or apparatus via a wire or wired coupling. The transceiver can communicate with further apparatus by any suitable known communications protocol. For example in some embodiments the transceiver can use a suitable universal mobile telecommunications system (UMTS) protocol, a wireless local area network (WLAN) protocol such as for example IEEE 802.X, a suitable short-range radio frequency communication protocol such as Bluetooth, or infrared data communication pathway (IRDA). In some embodiments the transceiver is coupled to an antenna 511 configured to transmit and/receive encoded forms of the audio signals described herein.

Additionally in some embodiments the device comprises at least one microphone 507 configured to capture audio signals, for example ambient audio signals or talker. The at least one microphone 507 comprises any suitable microphone type. The at least one microphone 507 is connected to the processor 503.

Furthermore in some embodiments the device comprises at least one loudspeaker 509. The at least one loudspeaker 509 is configured to output the audio signals.

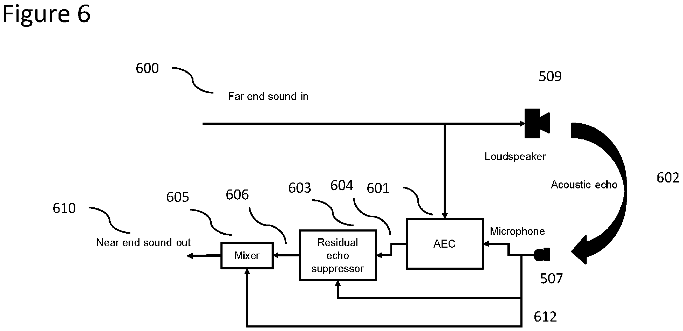

With respect to Figure 6 is shown a schematic view of an example AEC implementation. The example implementation receives the far end sound in (or far end or input audio signal) 600 which is passed to the loudspeaker 509 and the AEC 601.

The loudspeaker 509 generates the audio output and via an acoustic echo path 602 is coupled to a microphone 507.

The microphone 507 generates a microphone audio signal 612 which is passed to the AEC 601, a residual echo suppressor 603 and a mixer 605.

The AEC 601 having received the far end sound in (audio signal input) 600 microphone audio signal 612 is configured to generate an acoustic echo cancelled output 604, which can be passed to the residual echo suppressor 603. The AEC 601 for example is configured to implement any suitable AEC method.

Furthermore, the residual echo suppressor 603 is configured to receive the output 604 of the AEC 601 and the microphone audio signal 612 and generate a residual echo suppressed audio output 606. The residual echo suppressed audio output 606 is then passed to the mixer 605.

The mixer 605 is configured to receive the residual echo suppressed audio output 606 and the microphone audio signal 612 and generate a near end sound out (or output audio signal) 610.

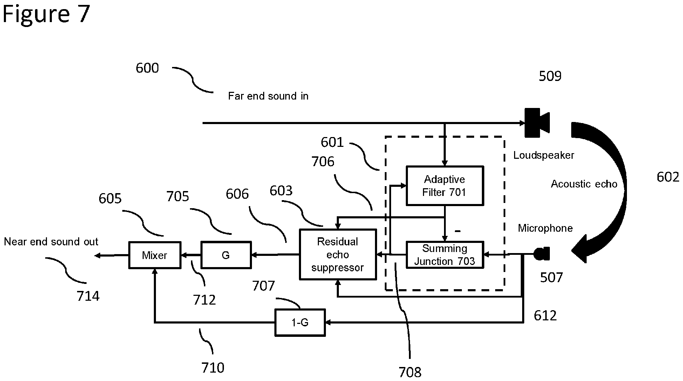

With respect to Figure 7 is shown in further detail the implementation example as shown in 6 wherein the AEC 601 and the control of the mixer shown in further detail according to some embodiments.

The example implementation shown in Figure 7 receives the far end sound in (or far end or input audio signal) 600 which is passed to the loudspeaker 509 and the AEC 601.

The loudspeaker 509 generates the audio output and via an acoustic echo path 602 is coupled to a microphone 507.

The microphone 507 generates a microphone audio signal 612 which is passed to the AEC 601, a residual echo suppressor 603 and a mixer 605.

The AEC 601 having received the far end sound in (audio signal input) 600 microphone audio signal 612 is configured to generate an acoustic echo cancelled output 604, which can be passed to the residual echo suppressor 603. The AEC 601 in some embodiments comprises an adaptive filter 701 and summing junction 703.

The adaptive filter 701 is configured to receive the far end sound in (audio signal input) 600 and a filter input from the summing junction output 708. The output of the adaptive filter 706 is passed as a negative input to a summing junction 703 and furthermore as an input to the residual echo suppressor 603.

The summing junction 703 is configured to receive as a positive input the microphone audio signal 612 and, as a negative input, the adaptive filter output 706 and generate an output 708 which is output as a filter control input to the adaptive filter 701 and the residual echo suppressor 603.

Furthermore, the residual echo suppressor 603 is configured to receive the outputs 706 and 708 from the AEC 601 (and the adaptive filter 701 and summing junction 703 respectively) and the microphone audio signal 612 and generate a residual echo suppressed audio output 606.

The residual echo suppressed audio output 606 is then passed to a mixer component gain 705.

The mixer component gain 705 is configured to multiply the residual echo suppressed audio output 606 by a gain G factor and pass the first audio signal 712 to the mixer 605.

Furthermore, the employ a further mixer component gain 707 configured to apply a further gain factor 1-G to the microphone audio signal 612 and generate a second audio signal 710 to the mixer 605.

The mixer 605 is configured to receive the residual echo suppressed based first audio signal input 712 and the microphone audio signal based second audio signal 710 and generate a near end sound out (or output audio signal) 714.

The AEC contribution can be controlled based on the change in the gain factor G (and associated further gain factor 1-G). In other words, using an AEC system "less" is achieved by mixing the fully echo cancelled audio with non-echo cancelled audio with different gains.

In some embodiments the mixer 605 mixes the AEC filter output 708 and residual echo suppressor output 606 with gains 705 and 707. In other words, the audio signal 612 (the audio signal from the microphone) is replaced by the audio signal 708 (from the summing junction) to change the `level' of the use of the AEC system.

In some embodiments the user of the ambient device can select (for example via a suitable user interface) or choose their device to be the ambient device and furthermore communicate this selection to the telecommunications server.

In some embodiments, the telecommunications server can select which device (or user) is the ambient device based on a user input or by analysing audio signals from the devices. The telecommunications server in these embodiments can then be configured to signal to the selected ambient device the selection result. The ambient device can then be configured to switch to sending ambient audio (and for example can switch to sending ambient audio signals when they previously are not doing so).

Furthermore, in some embodiments the telecommunications server is configured to apply a delay to all the connections where both ends are non-ambient devices. Telecommunications servers typically mix audio signals instead of sending them in separate streams as shown in the examples herein. Thus, in some embodiments the telecommunications server is configured to add a delay before mixing and in some embodiments is not configured to add a delay depending on whom the mix is intended to.

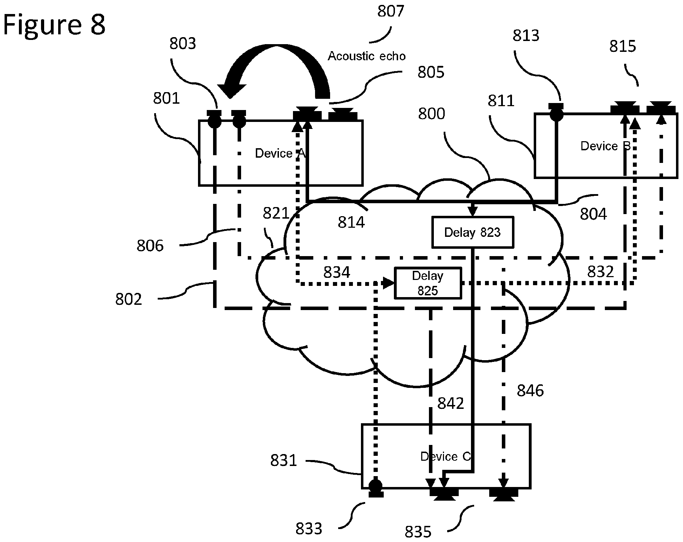

The communications system as shown in Figure 2 is shown in Figure 8 with implementation changes according to some embodiments. Thus, for example the system comprises Device A 801, Device B 811 and Device C 831 which are connected via the telecommunications server 821.

Device A 801 is shown comprising speakers 805, microphones 803 and acoustic echo path 807. Device B 811 further is shown comprising speakers 815 and microphone 813. Device C 831 is shown comprising speakers 835 and microphone 833.

In this example and as discussed herein there is implemented within the telecommunications server 821 a series of delays where the devices at both ends of a communication path are non-ambient devices.

This as shown in Figure 8 there is implemented a first delay 823 in the communications path 804 from (non-ambient) device B 811 and (non-ambient) device C 831 but no delay implemented in the communications path 814 from (non-ambient) device B 811 and (ambient) device A 801.

Also is shown in Figure 8 there is implemented a second delay 825 in the communications path 832 from (non-ambient) device C 831 and (non-ambient) device B 811 but no delay implemented in the communications path 834 from (non-ambient) device C 831 and (ambient) device A 801.

Furthermore, there is shown in Figure 8 non-delay communications paths from communications paths 802, 806 from (ambient) device A 801 and (non-ambient) device B 811 and non-delay communications paths from communications paths 842, 846 from (ambient) device A 801 and (non-ambient) device C 831.

In some embodiments the delay is estimated by comparing audio signals from different participants. For example, comparing audio that is transmitted from telecommunications server to the ambient device and received from the ambient device. The delay that generates a maximum correlation (or a correlation greater than a determined threshold) between these two signals is approximately equal to the desired delay.

Alternatively, in some embodiments an audio signal from the transmitting ambient device (A) and audio from a transmitting non-ambient device (B) can be compared in the telecommunications server to find the time delay that results in the best correlation (or a correlation greater than a determined threshold) between the two and the found time delay employed as the delay.

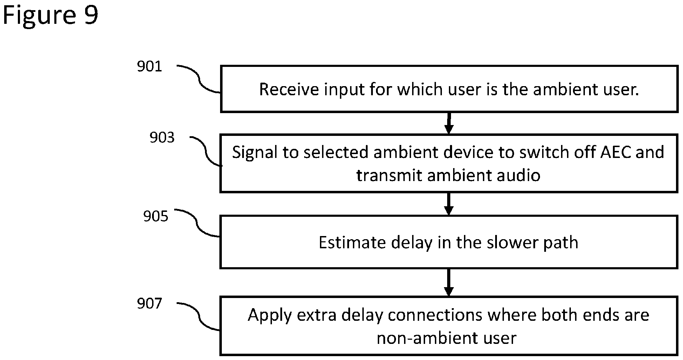

For example, Figure 9 shows an example flow diagram showing how to determine and apply the delay values.

For example, Figure 9 shows the operation of receiving inputs for which user is the ambient user as shown by 901.

Then is shown the signalling to the selected ambient device to switch off AEC and transmit ambient audio as shown by 903.

Following this is the estimation of the delay in the slower path as shown by 905.

Then apply an extra delay to connections where both ends are non-ambient devices as shown by 907.

If there are multiple ambient devices, a common generic delay can be used. The common delay may be the smallest delay of the ambient device delays or an average of the ambient device delays.

In some embodiments the extra delay is employed only for those participants that have muted their microphones. They are not actively participating in the conversation and thus the extra delay causes them no harm.

An example system was tested by recording echo signal from a commercial headphone product where the speaker signal is picked up by the headphone microphones. This is the acoustic echo as shown in Figure 8. In this test a user of device C hears both the echo from device A and the original signal from device B. Depending on the delay used, the echo is very well masked by the original signal or not masked at all. As was heard from various delayed samples, as long as the delay estimate does not err by more than 40ms, the original signal masks the echo well.

The error can be generated from estimating errors for the delay (less than 40ms).

In some embodiments where AEC is partially applied (used less) or not at all, it means that AEC is used overall less, but may still be used a significantly for some frequency bands. For example, in low rumble background noise AEC may be used to suppress high frequencies from speech that are typical in letters s, and t, for example.

In some embodiments there can be implemented AEC functionality in the telecommunication server in the network in addition to AEC functionality in the devices.

The transceiver can communicate with further apparatus by any suitable known communications protocol. For example in some embodiments the transceiver can use a suitable universal mobile telecommunications system (UMTS) protocol, a wireless local area network (WLAN) protocol such as for example IEEE 802.X, a suitable short-range radio frequency communication protocol such as Bluetooth, or infrared data communication pathway (IRDA).

The input/output port 2009 may be configured to receive the signals.

In some embodiments the device 2000 may be employed as at least part of the renderer. The input/output port 2009 may be coupled to headphones (which may be a headtracked or a non-tracked headphones) or similar.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
      I hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The term "non-transitory," as used herein, is a limitation of the medium itself (i.e., tangible, not a signal ) as opposed to a limitation on data storage persistency (e.g., RAM vs. ROM).

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A method for a communications system between at least three devices, the method comprising:
determining at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices;
controlling the at least one ambient transmitting device to reduce the effect of the controllable acoustic echo canceller; and
applying at least one delay difference to at least one communications path between non-ambient devices.

2. The method as claimed in claim 1, wherein applying the at least one delay difference to the at least one communications path between non-ambient devices is such that the at least one delay difference applied to the at least one communications path between non-ambient devices aims to reduce the effect of artifacts produced by the controllable acoustic echo canceller.

3. The method as claimed in any of claim 1 or 2, wherein determining at least one device of the at least three devices is the ambient transmitting device comprises at least one of:
at least one audio signal captured with respect to an audio scene surrounding the at least one ambient device;
determining one device whose audio is transmitted spatially;
selecting the at least one ambient transmitting device based on a user input; and
selecting the at least one ambient transmitting device based on an analysis of audio signals from the at least three devices.

4. The method as claimed in claim 3, wherein selecting the at least one ambient transmitting device based on an analysis of audio signals from the at least three devices comprises identifying at least one of:
a most music like audio signal; and
a least noise-like audio signal.

5. The method as claimed in any of claim 3 or 4, wherein determining at least one device of the at least three devices is the ambient transmitting device comprises determining at least one further ambient transmitting device whose audio signals are at least one of:
a non-spatial audio signal; and
a mono channel audio signal.

6. The method as claimed in any of claims 1 to 5, wherein applying the at least one delay difference to communications paths between non-ambient devices comprises at least one of:
applying a same delay difference to more than two communications paths between non-ambient devices;
applying a smallest of the at least one delay difference;
applying an average of the at least one delay difference; and
applying a separate one of the at least one delay difference to communications paths for each pair of non-ambient devices.

7. The method as claimed in any of claims 1 to 6, wherein the at least one delay difference to communications paths for each pair of non-ambient devices is further based on at least one of:
network conditions between non-ambient devices;
device hardware capability for the non-ambient devices; and
codec delays for the non-ambient devices.

8. The method as claimed in any of claims 1 to 7, wherein controlling the at least one ambient transmitting device to reduce the effect of the acoustic echo canceller comprises controlling ratio inputs for a mixing of an acoustic echo canceller audio signal with a microphone audio signal to control a component of the acoustic echo canceller audio signal in an output from the acoustic echo canceller.

9. The method as claimed in any of claims 1 to 8, further comprising:
determining at least one delay between a pair of non-ambient devices;
determining at least one further delay between the at least one ambient transmitting device and at least one non-ambient device; and
determining the at least one at least one delay difference based on the at least one delay and at least one further delay.

10. The method as claimed in claim 9, wherein the at least one delay between a pair of non-ambient devices is at least one non-ambient communication delay between the pair of non-ambient devices, and the at least one further delay between the at least one ambient transmitting device and at least one non-ambient device is at least one ambient communication delay.

11. An apparatus for a communications system between at least three devices, the apparatus comprising means configured to:
determine at least one device of the at least three devices is an ambient transmitting device, the ambient transmitting device configured with a controllable acoustic echo canceller to reduce echoes, wherein the at least one ambient transmitting device is configured to generate at least one ambient audio signal, and wherein the remaining at least two devices are non-ambient devices;
control the at least one ambient transmitting device to reduce the effect of the controllable acoustic echo canceller; and
apply at least one delay difference to at least one communications path between non-ambient devices.

12. The apparatus as claimed in claim 11, wherein the means configured to apply the at least one delay difference to the at least one communications path between non-ambient devices is such that the at least one delay difference applied to the at least one communications path between non-ambient devices aims to reduce the effect of artifacts produced by the controllable acoustic echo canceller.

13. The apparatus as claimed in any of claim 11 or 12, wherein the means for determining at least one device of the at least three devices is the ambient transmitting device comprises at least one of:
at least one audio signal captured with respect to an audio scene surrounding the at least one ambient device;
means for determining one device whose audio is transmitted spatially;
means for selecting the at least one ambient transmitting device based on a user input; and
means for selecting the at least one ambient transmitting device based on an analysis of audio signals from the at least three devices.

14. The apparatus as claimed in any of claims 11 to 13, wherein the means for applying the at least one delay difference to communications paths between non-ambient devices comprises means for at least one of:
applying a same delay difference to more than two communications paths between non-ambient devices;
applying a smallest of the at least one delay difference;
applying an average of the at least one delay difference; and
applying a separate one of the at least one delay difference to communications paths for each pair of non-ambient devices.

15. The apparatus as claimed in any of claims 11 to 14, wherein the means for controlling the at least one ambient transmitting device to reduce the effect of the acoustic echo canceller comprises means for controlling ratio inputs for a mixing of an acoustic echo canceller audio signal with a microphone audio signal to control a component of the acoustic echo canceller audio signal in an output from the acoustic echo canceller.
